# EUROPÄISCHE PATENTANMELDUNG

(11) **EP 2 151 586 A2**
(43) Veröffentlichungstag der Anmeldung: **10.02.2010**
(21) Anmeldenummer: 09008112.6
(22) Anmeldetag: 20.06.2009
(51) Int. Cl.: F15B 11/16, F16D 48/02, F16H 61/688

(54) **Hydraulikkreislauf**

(30) Priorität: 09.08.2008 DE 102008037235
(71) Anmelder: Volkswagen Aktiengesellschaft, 38436 Wolfsburg (DE)
(72) Erfinder: Bothe, Edgar, 31224 Peine (DE); Hinrichsen, Uwe, 38124 Braunschweig (DE)

(57) **Zusammenfassung**

Die Erfindung betrifft einen Hydraulikkreislauf (1), insbesondere zur Steuerung mindestens einer Reibkupplung eines automatischen oder automatisierten Kraftfahrzeuggetriebes und/oder des Ein- und Ausrückens der Gangstufen eines derartigen Getriebes, mit einem im Hydraulikkreislauf zumindest zeitweise strömenden Fluid, mit mindestens einem Arbeitszylinder (2, 3), mit mindestens einem Druckregelventil (4, 5), insbesondere mit jeweils einem Druckregelventil (4,5) je Arbeitszylinder (2, 3), zur Steuerung des Drucks im Arbeitszylinder (2, 3) und mit mindestens einer Leckagestelle (21, 22), wobei die Leckagestelle (21, 22) mit einem Leckageventil (23, 24) abschaltbar ist

Um einen mit hoher Leistungsdichte schnell und präzise steuerbaren Hydraulikkreislauf (1) bereitzustellen, ist die Leckagestelle (21, 22) künstlich und funktional wirksam zwischen dem Arbeitszylinder (2,3) und dem Druckregelventil (4,5) ausgebildet.

## Beschreibung

Die Erfindung betrifft einen Hydraulikkreislauf, insbesondere zur Steuerung mindestens einer Reibkupplung eines automatischen oder automatisierten Kraftfahrzeuggetriebes und/oder des Ein- und Ausrückens der Gangstufen eines derartigen Getriebes, mit einem im Hydraulikkreislauf zumindest teilweise strömenden Fluid, mit mindestens einem Arbeitszylinder, mit mindestens einem Druckregelventil, insbesondere mit jeweils einem Druckregelventil je Arbeitszylinder, zur Steuerung des Druckes im Arbeitszylinder und mit mindestens einer Leckagestelle, wobei die Leckagestelle mit einem Leckageventil abschaltbar ist. Weiterhin betrifft die Erfindung ein Verfahren zur Steuerung eines derartigen Hydraulikkreislaufes.

Im Stand der Technik können Hydraulikkreisläufe dazu benutzt werden, um mit hoher Leistungsdichte präzise und schnell Steuerungsaufgaben zu verrichten. Im Automobilbau werden z. B. automatisierte und/oder automatische Kraftfahrzeuggetriebe mit derartigen Hydraulikkreisläufen gesteuert. Das Kraftfahrzeuggetriebe kann dabei mindestens eine Reibkupplung aufweisen. Insbesondere kann das Kraftfahrzeuggetriebe als Doppelkupplungsgetriebe mit einer Doppelkupplung ausgestaltet sein. Die Doppelkupplung weist dann eine erste und eine zweite Reibkupplung auf, die zu der "Doppelkupplung" zusammengefasst sind. Hierdurch werden die unterschiedlichen Teilgetriebe eines Doppelkupplungsgetriebes angesteuert, wobei die erste Kupplung dem ersten Teilgetriebe und die zweite Kupplung dem zweiten Teilgetriebe zugeordnet ist. Um die Schaltvorgänge im Doppelkupplungsgetriebe zu realisieren, können die beiden Reibkupplungen hydraulisch angesteuert werden, nämlich mit entsprechend druckbeaufschlagten Arbeitszylindern. Ferner können den Gängen zugeordnete Stellglieder, insbesondere die jeweiligen Schiebemuffen ebenfalls hydraulisch mit Hilfe des Hydraulikkreislaufes angesteuert werden. Die entsprechende Stellbewegungen der Kupplung und/oder der Stellglieder erfolgt vzw. über jeweils einen Arbeitszylinder. Als Fluid wird vzw. ein Hydrauliköl verwendet.

Bei dem Hydraulikkreislauf wird das Fluid vzw. mittels einer Pumpe auf ein erhöhtes Druckniveau - den Arbeitsdruck - gebracht. Der Arbeitsdruck ist dabei höher als ein Basisdruck. Der Basisdruck kann bspw. dem Druck in einem Getriebesumpf bzw. Tank entsprechen, aus dem das Fluid gefördert wird.

Zur Steuerung des jeweiligen Arbeitszylinders ist vzw. jeweils mindestens ein Druckregelventil vorgesehen. Vzw. ist jedem Arbeitszylinder daher ein Druckregelventil zugeordnet. Die Druckregelventile verbinden den zugehörigen Arbeitszylinder jeweils entweder mit einem Arbeitsdruck oder mit dem Basisdruck.

Wenn der Arbeitszylinder mit dem Arbeitsdruck verbunden wird, steigt in einem Druckraum des Arbeitszylinders der Druck an und ein in dem Druckraum verschiebbar geführter Kolben wird entsprechend verschoben. Wenn der Druckraum mit dem Getriebesumpf durch das Druckregelventil verbunden ist, fällt der Druck im Arbeitsraum und der Kolben wird entsprechend in die entgegengesetzte Richtung bewegt. Durch wechselseitiges Öffnen und Schließen des Druckregelventils kann der Druck im Druckraum des Arbeitszylinders und damit die Stellung des Kolbens variiert werden.

Aus der EP 1 446 349 B1 ist ein Hydraulikkreislauf zur Steuerung und Bewegung eines Aufzugs bekannt. Der Aufzug weist eine Aufzugskabine auf, die von einem hydraulisch betätigten Arbeitszylinder bewegbar ist. Die Kraftübertragung vom Arbeitszylinder auf die Aufzugskabine erfolgt dabei mittels eines Seils, das über eine am Arbeitszylinder befestigte Rolle umgelenkt ist, wobei das eine Ende des Seils an einem Gebäudeteil befestigt ist und das andere Ende des Seils an der Aufzugskabine befestigt ist. An dem Arbeitszylinder ist eine Zylinderleitung angeschlossen, die den Arbeitszylinder mit einem Druckregelventil verbindet. Dieses Druckregelventil ist als elektrisch ansteuerbares Auf-Zu-Ventil ausgebildet. Das Druckregelventil ist mit einer Pumpe verbunden, die von einem elektrischen Motor angetrieben wird. An der Pumpe ist wiederum eine Speicherleitung angeschlossen, die zu einem Druckspeicher führt. Der Druckspeicher ist wiederum mit einer Ladepumpe verbunden, die von einem Elektromotor angetrieben wird und mittels Hydrauliköl von einem Tank in den Druckspeicher förderbar ist.

Aus der EP 1 446 349 B1 ist nun bekannt, dass die Pumpe eine Leckagestelle bildet, so dass Leckverluste über die Pumpe auftreten. Zur Abführung der Leckageverluste ist eine Leckageleitung vorgesehen, die in den Tank führt. In der Leckageleitung ist ein Leckageventil angeordnet, das als Auf-Zu-Ventil ausgebildet ist und zum Absperren der Leckageleitung dient. Beim Stillstand des Aufzuges ist das Leckageventil geschlossen, wodurch verhindert wird, dass sich der Druckspeicher bei Stillstand des Aufzuges durch die Leckage der Pumpe fortlaufend entlädt. Dieses Entladen würde einen Energieverlust bedeuten, was durch das Leckageventil hier verändert wird. Hier wird nun vorgeschlagen die Leckage durch das Leckageventil zu unterbinden.

In bekannten Anwendungen von Hydraulikkreisläufen, insbesondere bei automatischen Getrieben wird teilweise die vorhandene Leckage genutzt, um die Regelgüte des Hydraulikkreislaufes zu verbessern. Ist zuwenig Leckage vorhanden, kann diese bspw. durch zusätzliche Bohrungen erzeugt bzw. vergrößert werden. Der Nachteil einer nennenswerten Leckage ist, dass die Pumpe des Hydraulikkreislaufes einen ständigen Ölstrom unter hohem Druck zuführen muss, um den permanenten Verlust von Drucköl durch die Leckage zu kompensieren. Aus diesem Grund werden derartige Systeme meist dort eingesetzt, wo eine permanent laufende Hydraulikpumpe einen permanenten Ölstrom sicherstellt, insbesondere wird bspw. die Ölpumpe dann direkt vom Verbrennungsmotor angetrieben, was allerdings den Wirkungsgrad des Gesamtsystems verschlechtert.

Auf der anderen Seite ist es - im Ergebnis betrachtet - von Vorteil, die Leckage eines hydraulischen Systems zu minimieren, so dass kein permanenter Ölstrom zur Versorgung zur Verfügung gestellt werden muss. In diesem Fall ist es möglich, dass Öl mittels einer elektrisch angetriebenen Ölpumpe zu fördern. Diese Pumpe läuft nur im Bedarfsfall, was den Wirkungsgrad des hydraulischen Systems, also des Hydraulikkreislaufes verbessert. Damit die Pumpe nicht permanent anlaufen muss und wieder abgeschaltet wird, wird in der Regel ein Druckspeicher vorgesehen, aus dem das Hydrauliksystem, also der Hydraulikkreislauf eine gewisse Zeit versorgt werden kann. Eine derartige Anordnung macht nur Sinn, wenn in dem Hydrauliksystem keine bzw. nur eine geringe Leckage auftritt, da wenn eine größere Leckage auftritt, die Pumpe, insbesondere Elektropumpe länger laufen muss, was energetisch ungünstig ist, da derartige Pumpen insbesondere auch nicht für den Dauerbetrieb ausgelegt sind.

Der Erfindung liegt daher die Aufgabe zugrunde, die im Stand der Technik bekannten Hydraulikkreislaufe derart auszugestalten und weiterzubilden, dass die oben genannten Nachteile vermieden sind und ein mit hoher Leistungsdichte schnell und präzise steuerbarer Hydraulikkreislauf bereit gestellt wird.

Die zuvor aufgezeigte Aufgabe wird nun dadurch gelöst, dass die Leckagestelle künstlich ausgebildet ist und funktional wirksam zwischen dem Arbeitszylinder und dem Druckregelventil im Hydraulikkreislauf ausgebildet ist. Diese Realisierung hat - gemäß dem Verfahren zur Steuerung eines derartigen Hydraulikkreislaufes - den Vorteil, dass in Betriebsphasen, in denen einen Regelung des Arbeitszylinders mit hoher Güte erforderlich ist, die Leckagestelle mit dem Leckageventil zuschaltbar ist und in anderen Betriebsphasen, in denen der Arbeitszylinder mit dem Arbeitsdruck oder dem Basisdruck beaufschlagt ist, zur Erhöhung des Wirkungsgrades des Hydraulikkreislaufes die Leckagestelle mit dem Leckageventil abschaltbar ist. Die Regelgüte des Hydraulikkreislaufes ist dadurch verbessert, dass zur Regelung des Druckes im Arbeitszylinder die Leckagestelle geöffnet werden kann und die Feineinstellung des Druckes im Arbeitszylinders mit dem Druckregelventil erfolgen kann. Der Arbeitszylinder kann mit dem Druckregelventil über eine Zylinderleitung verbunden sein, wobei die Leckagestelle an der Zylinderleitung ausgebildet ist. Das Druckregelventil kann zum Druckabbau im Arbeitszylinder nur den Zulauf in die Zylinderleitung drosseln und muss weder den Zulauf in die Zylinderleitung schließen noch die Zylinderleitung mit einem Ablauf bspw. zu einem Tank verbinden, wobei der Druckabbau im Arbeitszylinder dann über die Leckagestelle erfolgt.

Die Leckagestelle ist künstlich ausgebildet und kann auf einfache Weise bspw. durch Bohrungen erzeugt werden. Die Größe der Leckagestelle ist vzw. so ausgebildet, dass eine möglichst hohe Regelgüte erreichbar ist. Die Verlustmenge des Fluids, das durch die Leckagestelle abfließt, ist erfindungsgemäß kleiner als 2 l/min. Der bevorzugte Volumenstrom bei der erfindungsgemäßen Lösung liegt zwischen 0,5 l/min. bis 1,0 l/min. Die geometrische Dimension der ausgeführten Leckagestelle ergibt sich aus dem Druck des Fluids innerhalb des Hydrauliksystems und der gewünschten Verlustmenge. Um den Verlust des Fluids durch die Leckagestelle zu kompensieren bzw. zu vermeiden, falls keine hohe Regelgüte erforderlich ist, ist die Leckagestelle mit dem Leckageventil abschaltbar, also "schließbar". Dies hat den Vorteil, dass eine Pumpe, die den Arbeitsdruck des Fluids bereitstellt, nicht ständig fördern muss. Da kein permanenter Fluidstrom zur Versorgung zur Verfügung gestellt werden muss, kann vzw. eine elektrisch angetriebene Pumpe, insbesondere eine Ölpumpe zum Einsatz kommen. Diese Pumpe läuft dann vzw. nur im Bedarfsfall, wodurch der Wirkungsgrad des Hydraulikkreislaufs verbessert ist. In den Betriebsphasen des Hydraulikkreislaufs, in denen eine Druckregelung mit hoher Güte erforderlich ist, bspw. zur Ansteuerung einer Reibkupplung oder zur Ansteuerung von Gangstellern in einem Automatikgetriebe, kann die künstliche Leckagestelle über das Schaltventil zugeschaltet, also "geöffnet" werden. In unkritischen Phasen, wenn der Druck dem Arbeitsdruck entspricht oder der Arbeitszylinder nur mit dem Basisdruck beaufschlagt ist, kann die Leckagestelle über das Schaltventil abgeschaltet werden. Im zeitlichen Mittel ist dann die Leckage klein, so dass von der Druckversorgung, insbesondere der Pumpe kein großer Volumenstrom benötigt wird, was den Wirkungsgrad des Hydraulikkreislaufs positiv beeinflusst. Die eingangs beschriebenen Nachteile sind daher vermieden und entsprechende Vorteile sind erzielt.

Es gibt nun eine Vielzahl von Möglichkeiten, den erfindungsgemäßen Hydraulikkreislauf in vorteilhafter Art und Weise auszugestalten und weiterzubilden. Hierfür darf zunächst auf die dem Patentanspruch 1 nachgeordneten Patentansprüche verwiesen werden. Im Folgenden werden nun zwei bevorzugte Ausgestaltungen der Erfindung anhand der Zeichnung und der dazugehörigen Beschreibung näher erläutert. In der Zeichnung zeigt:
- Fig. 1: in einer schematischen Darstellung einen erfindungsgemäßen Hydraulikkreislauf für ein Doppelkupplungsgetriebe eines Kraftfahrzeuges,
- Fig. 2: in einer schematischen Darstellung einen weiteren erfindungsgemäßen Hydraulikkreislauf für ein Doppelkupplungsgetriebe eines Kraftfahrzeuges, und
- Fig. 3: in einer schematischen Schnittansicht ein Druckregelventil.

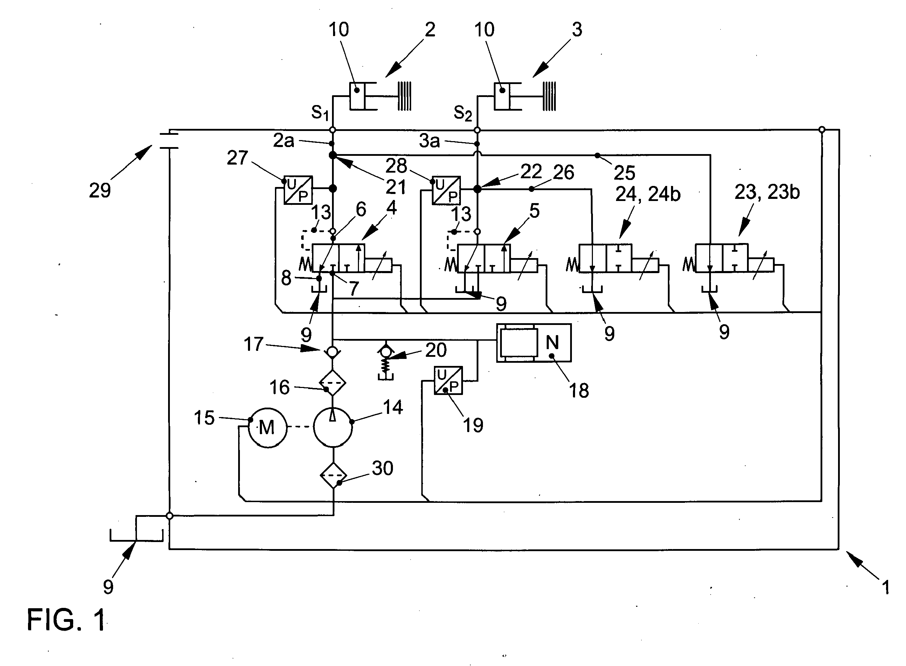

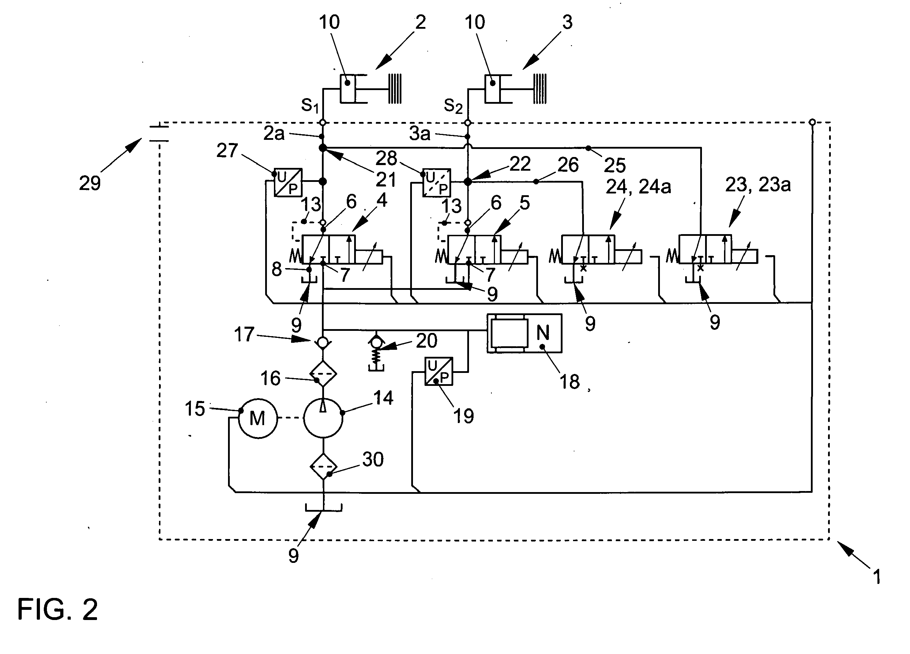

In den Fig. 1 und Fig. 2 ist jeweils ein Hydraulikkreislauf 1 gut zu erkennen. Die in den Fig. 1 und 2 dargestellten Hydraulikkreisläufe 1 sind im Wesentlichen gleich aufgebaut, so dass für entsprechende Bauteile gleiche Bezugszeichen verwendet werden.

Der Hydraulikkreislauf 1 dient zur Steuerung von mindestens einer Reibkupplung, hier von zwei Reibkupplungen (nicht dargestellt), und/oder von mehreren Gangstellern eines automatischen oder automatisierten Kraftfahrzeuggetriebes, wobei das Getriebe ebenfalls nicht dargestellt ist. Vzw. ist das Kraftfahrzeuggetriebe als Doppelkupplungsgetriebe ausgebildet und es werden hier die einzelnen Kupplungen der Doppelkupplung angesteuert oder mit Hilfe der Arbeitszylinder werden entsprechende Gangsteller, vzw. Schiebemuffen angesteuert, dies ist abhängig vom jeweiligen Anwendungsfall und der Art des Getriebes, wo ein derartiger Hydraulikreislauf zum Einsatz kommt.

Der Hydraulikkreislauf 1 weist ein Fluid als Hydraulikmittel auf. Das Fluid ist vzw. als ein Hydrauliköl ausgebildet. Der Hydraulikkreislauf 1 weist mindestens einen Arbeitszylinder auf. In der vorliegenden Ausgestaltung weist der Hydraulikkreislauf 1 zwei Arbeitszylinder 2 und 3 auf. Die Arbeitszylinder 2 und 3 können zur Betätigung der beiden Reibkupplungen des Doppelkupplungsgetriebes dienen, oder mit Hilfe der Arbeitszylinder werden entsprechende Gangsteller und/oder Schiebemuffen angesteuert. Dies ist abhängig vom jeweiligen Anwendungsfall. Mit dem Hydraulikkreislauf 1 können bei einer hohen Leistungsdichte die Arbeitszylinder 2 und 3 präzise und schnell gesteuert werden.

Der Hydraulikkreislauf 1 weist pro Arbeitszylinder 2, 3 vzw. je ein Druckregelventil 4 bzw. 5 auf. Jedem Arbeitszylinder 2, 3 ist vzw. eines der Druckregelventile 4, 5 zugeordnet. Durch Betätigen der Druckregelventile 4, 5 können die Arbeitszylinder 2 und 3, wie im Folgenden beschrieben wird, gesteuert werden. Die Druckregelventile 4, 5 sind vzw. stufenlos regel- bzw. steuerbar. Jedes der Druckregelventile 4, 5 ist mit dem zugehörigen Arbeitszylinder 2, 3 über eine Zylinderleitung 2a, 3a verbunden.

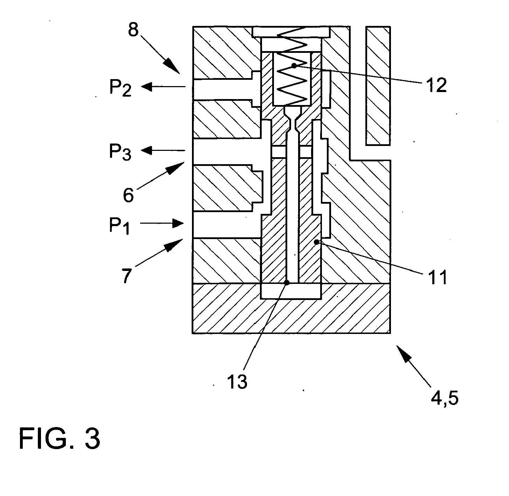

Bevor mit der Beschreibung der Hydraulikkreisläufe 1 in den Fig. 1 und 2 fortgefahren wird, darf ein Ausführungsbeispiel eines Druckregelventils 4 bzw. 5 anhand von Fig. 3 näher erläutert werden:

Das Druckregelventil 4, 5 ist vzw. als 3/2-Wegeventil ausgebildet. Das Druckregelventil 4, 5 weist vzw. drei Anschlüsse auf, nämlich einen Arbeitszylinderanschluss 6, einen Arbeitsdruckanschluss 7 und einen Basisdruckanschluss 8. Der Arbeitszylinderanschluss 6 ist dabei funktional wirksam jeweils mit dem zugehörigen Arbeitszylinder 2 bzw. 3 verbunden.

Der Arbeitsdruckanschluss 7 ist mit einem Arbeitsdruck beaufschlagt und dient zumeist als Zulauf, wie es durch den Pfeil P1 angedeutet ist. An dem Basisdruckanschluss 8 liegt ein niedrigerer Basisdruck an und dient als Ablauf, wie es durch den Pfeil P2 angedeutet ist. Bspw. kann der Basisdruckanschluss 8 drucklos geschaltet sein und mit einem Sumpf 9 funktional wirksam verbunden sein. Der Sumpf 9 kann dabei von einem nicht dargestellten Behälter für das Fluid gebildet sein. Insbesondere kann der Sumpf 9 auch als Sumpf des Kraftfahrzeuggetriebes ausgestaltet sein.

Der Arbeitszylinderanschluss 6 ist insbesondere mit einem Druckraum 10 des jeweiligen Arbeitszylinders 2 bzw. 3 funktional wirksam verbunden. In der in Fig. 3 gezeigten Stellung des Druckregelventils 4,5 sind der Arbeitsdruckanschluss 7 und der Arbeitszylinderanschluss 6 in Durchlassrichtung miteinander verbunden, so dass das Fluid zum Arbeitszylinder 2,3 strömen kann, was hier durch den Pfeil P3 angedeutet ist. Der Arbeitszylinderanschluss 6 ist mit der Zylinderleitung 2a bzw. 3a verbunden (vgl. Fig. 1 und Fig. 2).

Um den Druck im Druckraum 10 des jeweiligen Arbeitszylinders 2, 3 zu steuern, weist das Druckregelventil 4, 5 vzw. einen Schieber 11 auf. Das Druckregelventil 4, 5 verbindet den Druckraum 10 der Arbeitszylinder 2 bzw. 3 über den Schieber 11 zum Druckaufbau mit dem Arbeitsdruckanschluss 7 und zum Druckabbau mit dem Basisdruckanschluss 8. Der Schieber 11 ist hier mit einer Feder 12 vorgespannt. Ferner ist der Schieber 11 über eine Rückkopplung 13 mit dem Druck in der Zylinderleitung 2a, 3a verbunden, wobei die Rückkopplung 13 in den Fig. 1 und 2 strichpunktiert dargestellt ist. Die Rückkopplung 13 wirkt dabei entgegengesetzt zu der Federvorspannung, wodurch die Stellung des Schiebers 11 im Druckregelventil 4, 5 festgelegt ist. Der Schieber 11 weist mehrere nicht näher bezeichnete Steuerkanten auf, mit denen der Arbeitsdruckanschluss 7 und Basisdruckanschluss 8 wechselweise verschließbar und mit dem Arbeitszylinderanschluss 6 verbindbar sind. Durch die Stellung des Schiebers 11 und damit der Stellung der Steuerkanten relativ zu den drei Anschlüssen ist der Druck im Druckraum 10 regelbar. Zusätzlich zur Feder 12 kann eine weitere Kraft auf den Schieber 11 aufgebracht werden, wodurch der eingeregelte Druck einstellbar ist.

In den Fig. 1 und Fig. 2 ist gut zu erkennen, dass zur Erzeugung des Arbeitsdrucks eine Pumpe 14 im Hydraulikkreislauf 1 vorgesehen ist. Der Arbeitsdruckanschluss 7 ist dabei funktional wirksam mit der Pumpe 14 verbunden. Die Pumpe 14 ist elektrisch, hier durch einen Elektromotor 15 (M) antreibbar bzw. wird hier angetrieben. Zwischen den Druckregelventilen 4, 5 und der Pumpe 14 ist ein Druckfilter 16 und ein Rückschlagventil 17 angeordnet.

Mit dem Arbeitsdruck wird ferner eine Druckspeichervorrichtung 18 beaufschlagt, wobei die Druckspeichervorrichtung 18 funktional wirksam zwischen der Pumpe 14 und dem Arbeitsdruckanschluss 7 in dem Hydraulikkreislauf 1 angeordnet ist. Der Arbeitsdruck wird mit einem Arbeitsdrucksensor 19 gemessen. Zwischen der Druckspeichervorrichtung 18, dem Rückschlagventil 17 und dem Druckregelventilen 4, 5 ist ein Druckbegrenzungsventil 20 funktional wirksam angeordnet, wobei das Druckbegrenzungsventil 20 zum Sumpf 9 des Getriebes öffnet, falls der Arbeitsdruck zu stark steigt.

Der Hydraulikkreislauf 1 weist ferner mindestens eine Leckagestelle auf, hier vzw. eine erste Leckagestelle 21 und eine zweite Leckagestelle 22. Jede der Leckagestellen 21 und 22 ist mit einem zugehörigen Leckageventil 23 bzw. 24 abschaltbar, also "schließbar".

Die eingangs beschriebenen Nachteile sind nun zunächst dadurch vermieden, dass die Leckagestelle 21, 22 künstlich ausgebildet ist und jeweils funktional wirksam zwischen dem Arbeitszylinder 2, 3 und dem, insbesondere zugehörigen Druckregelventil 4, 5 im Hydraulikkreislauf 1 angeordnet ist. Dies hat den Vorteil, dass in Betriebsphasen in denen eine Regelung des Arbeitszylinders 2, 3 mit hoher Güte erforderlich ist, die Leckagestelle 21, 22 mit dem zugehörigen Leckageventil 23, 24 zuschaltbar ist, also "öffnenbar" ist, und in anderen Betriebsphasen, in denen der Arbeitszylinder 2, 3 mit dem Arbeitsdruck oder dem Basisdruck beaufschlagt ist, zur Erhöhung des Wirkungsgrades des Hydraulikkreislaufes 1 die Leckagestelle 21, 22 mit dem Leckageventil 23, 24 abschaltbar, also "schließbar" ist. Jedem Arbeitszylinder 2, 3 ist vzw. ein Druckregelventil 4, 5 und eine Leckagestelle 21, 22 zugeordnet. Es können zwei Arbeitszylinder 2, 3, aber in anderer nicht dargestellter Ausgestaltung können auch mehr als zwei Arbeitszylinder oder auch nur ein Arbeitszylinder vorgesehen sein. Dies ist abhängig vom jeweiligen Anwendungsfall.

Wenn die Leckageventile 23, 24 geöffnet sind und so zwischen dem Druckregelventil 4,5 und dem Arbeitszylinder 2,3 eine Leckage vorhanden ist, muss zum Druckabbau im Druckraum 10 des Arbeitszylinders 2, 3 mit dem jeweiligen Druckregelventil 4, 5 nur der Fluidzulauf zum Druckraum 10 gedrosselt werden, ohne dass der Arbeitsdruckanschluss 7 geschlossen und ohne dass der Basisdruckanschluss 8 zum Sumpf 9 des Doppelkupplungsgetriebes geöffnet werden muss. Hierdurch kann das Druckregelventil 4, 5 schneller arbeiten und die Regelgüte des Hydraulikkreislaufes 1 ist verbessert. Die Leckagestellen 21, 22 und die Leckageventile 23, 24 sind derart ausgebildet und/oder angeordnet, dass zum Druckabbau in den Druckregenventilen 4, 5 der Arbeitszylinderanschluss 6 und der Arbeitsdruckanschluss 7 in Durchlassrichtung drosselbar sind und der Druck im Arbeitszylinder 2, 3 über die jeweilige Leckagestelle 21, 22 abbaubar ist. Es sind Leckageleitungen 25, 26 vorhanden, wobei die Leckageleitungen 25, 26 zwischen den Druckregelventilen 4, 5 und den Arbeitszylindern 2, 3 von den Zylinderleitungen 2a, 3a zum Sumpf 9 abzweigen und die Leckageventile 23, 24 aufweisen.

Die Leckagestellen 21, 22 sind künstlich ausgebildet. Bspw. können die Leckagestellen 21, 22 durch Bohrungen erzeugt werden oder vorhandene Leckagen durch Bohrungen erweitert werden.

Vzw. ist das jeweilige Leckageventil 23, 24 stufenlos regelbar. Die Leckageventile 23, 24 können dabei als Durchflussregelventile 23a, 24a ausgebildet sein, insbesondere als 3/2-Wegeventile, wie es in Fig. 2 dargestellt ist. Dies hat den Vorteil, dass ein derartiges Ventil gleichzeitig auch die Funktion als Sicherheitsventil übernehmen könnte. Die Leckageventile 23, 24 können alternativ als An/Aus-Ventile 23b, 24b ausgebildet sein, insbesondere als 2/2-Wegeventile, wie es in Fig. 1 dargestellt ist.

Damit die Pumpe 14 nicht einen permanenten Fluidstrom bereitstellen muss, ist es sinnvoll, die Leckage des Hydraulikkreislaufs 1 zu minimieren, was durch Schließen der Leckageventile 23, 24 erreicht wird. Hierdurch ist es möglich, das Fluid mit der elektrisch angetriebenen Pumpe 14 zu fördern. Die Pumpe 14 läuft nur im Bedarfsfall, was den Wirkungsgrad des Hydraulikkreislaufs 1 verbessert. Damit die Pumpe 14 nicht anläuft und kurz danach wieder abschaltet, ist hier die Druckspeichervorrichtung 18 vorgesehen, wobei aus der Druckspeichervorrichtung 18 der Arbeitsdruck eine gewisse Zeit ohne Pumpenleistung bereitstellbar ist.

Durch die Abschaltmöglichkeiten mittels der Leckageventile 23, 24 sind die Vorteile eines leckagebehafteten druckgeregelten Hydraulikkreislaufs 1 mit den Vorteilen eines leckagefreien Hydraulikkreislaufes 1 kombiniert. In den Betriebsphasen, in denen eine Druckregelung mit hoher Güte erforderlich ist, z. B. zum Ansteuern der Reibkupplungen oder der Gangsteller in dem Automatikgetriebe, werden die Leckagestellen 21, 22 über die Leckageventile 23, 24 zugeschaltet. In unkritischen Phasen, wenn der Druck im Druckraum 10 der Arbeitszylinder 2, 3 dem Arbeitsdruck oder dem Basisdruck entspricht und daher an die Regelgüte keine hohen Anforderungen gestellt werden, können die Leckagestellen 21, 22 über die Leckageventile 23, 24 abgeschaltet werden. Im zeitlichen Mittel ist dann die Leckage des Hydraulikkreislaufs 1 klein, so dass von der Pumpe 14 kein großer Volumenstrom des Fluids benötigt wird, was den Wirkungsgrad des Hydraulikkreislaufes 1 verbessert. Der am Arbeitszylinder 2, 3 und dem Arbeitszylinderanschluss 6 anliegende Druck ist vzw. mit einem Drucksensor 27 bzw. 28 messbar.

Ferner weist der Hydraulikkreislauf 1 einen Überlauf 29 auf. Der Überlauf 29 kann dabei zur Entlüftung und zur Einfüllung Hydrauliköl etc. am nicht dargestellten Getriebe dienen. Das von der Pumpe 14 aus dem Sumpf 9 gepumpte Hydrauliköl wird über ein Sieb 30 gefiltert.

Die oben genannten Nachteile sind daher mit dem erfindungsgemäßen Hydraulikkreislauf 1 bzw. mit dem Verfahren zur Steuerung dieses Hydraulikkreislaufes 1 vermieden und entsprechende Vorteile sind erzielt.

### Bezugszeichenliste

- 1: Hydraulikkreislauf
- 2: Arbeitszylinder
- 2a: Zylinderleitung
- 3: Arbeitszylinder
- 3a: Zylinderleitung
- 4: Druckregelventil
- 5: Druckregelventil
- 6: Arbeitszylinderanschluss
- 7: Arbeitsdruckanschluss
- 8: Basisdruckanschluss
- 9: Sumpf
- 10: Druckraum
- 11: Schieber
- 12: Feder
- 13: Rückkopplung
- 14: Pumpe
- 15: Elektromotor
- 16: Druckfilter
- 17: Rückschlagventil
- 18: Druckspeichervorrichtung
- 19: Arbeitsdrucksensor
- 20: Druckbegrenzungsventil
- 21: Leckagestelle
- 22: Leckagestelle
- 23: Leckageventil
- 23a: Durchflussregelventil
- 23b: An/Aus-Ventil
- 24: Leckageventil
- 24a: Durchflussregelventil
- 24b: An/Aus-Ventil
- 25: Leckageleitung
- 26: Leckageleitung
- 27: Drucksensor
- 28: Drucksensor
- 29: Überlauf
- 30: Sieb
- P1: Pfeil
- P2: Pfeil
- P3: Pfeil

## Patentansprüche

1. Hydraulikkreislauf (1), insbesondere zur Steuerung mindestens einer Reibkupplung eines automatischen oder automatisierten Kraftfahrzeuggetriebes und/oder des Ein- und Ausrückens der Gangstufen eines derartigen Getriebes, mit einem im Hydraulikkreislauf zumindest zeitweise strömenden Fluid, mit mindestens einem Arbeitszylinder (2, 3), mit mindestens einem Druckregelventil (4, 5), insbesondere mit jeweils einem Druckregelventil (4,5) je Arbeitszylinder (2, 3), zur Steuerung des Drucks im Arbeitszylinder (2, 3) und mit mindestens einer Leckagestelle (21, 22), wobei die Leckagestelle (21, 22) mit einem Leckageventil (23, 24) abschaltbar ist, **dadurch gekennzeichnet, dass** die Leckagestelle (21, 22) künstlich und funktional wirksam zwischen dem Arbeitszylinder (2,3) und dem Druckregelventil (4,5) ausgebildet ist.

2. Hydraulikkreislauf nach Anspruch 1, **dadurch gekennzeichnet, dass** das Druckregelventil (4, 5) mit einem zugehörigen Arbeitszylinder (2, 3) über eine Zylinderleitung (2a, 3a) verbunden ist und die Leckagestelle (21, 22) an der Zylinderleitung (2a, 3a) ausgebildet ist.

3. Hydraulikkreislauf nach Anspruch 1 oder 2 , **dadurch gekennzeichnet, dass** die Leckagestelle (21, 22) und das Leckageventil (23, 24) derart ausgebildet und/oder angeordnet sind, dass zum Druckabbau mit dem Druckregelventil (4, 5) der Zulauf zur Zuleitung (2a,3a) in Durchlassrichtung drosselbar ist und der Druck im Arbeitszylinder (2, 3) über die Leckagestelle (21, 22) abbaubar ist.

4. Hydraulikkreislauf nach einem der vorstehenden Ansprüche, **dadurch gekennzeichnet, dass** von der Leckagestelle (21, 22) eine mit dem Leckageventil (23, 24) auf- und absperrbare Leckageleitung (25, 26) abzweigt.

5. Hydraulikkreislauf nach einem der vorstehenden Ansprüche, **dadurch gekennzeichnet, dass** das Druckregenventil (4, 5) mit einem Arbeitsdruck und einem niedrigeren Basisdruck versorgbar ist.

6. Hydraulikkreislauf nach einem der vorstehenden Ansprüche, **dadurch gekennzeichnet, dass** das Druckregelventil (4, 5) einen Schieber, ein funktional wirksam mit dem Arbeitszylinder (2, 3) und der Leckagestelle (21, 22) verbundenen Arbeitszylinderanschluss (6), einen Arbeitsdruckanschluss (7) und einen Basisdruckanschluss (8) aufweist.

7. Hydraulikkreislauf nach einem der vorstehenden Ansprüche, **dadurch gekennzeichnet, dass** das Leckageventil (23, 24) als Durchflussregelventil (23a, 24a) ausgebildet ist.

8. Hydraulikkreislauf nach einem der vorstehenden Ansprüche, **dadurch gekennzeichnet, dass** das Leckageventil (23, 24) als An/Aus-Ventil (23b, 24b) ausgebildet ist.

9. Hydraulikkreislauf nach einem der vorstehenden Ansprüche, **dadurch gekennzeichnet, dass** das Leckageventil (23, 24) zwischen dem zugehörigen Arbeitszylinder (2,3) und einem Sumpf (9) geschaltet ist.

10. Hydraulikkreislauf nach einem der vorstehenden Ansprüche, **dadurch gekennzeichnet, dass** eine Pumpe (14) zur Erzeugung des Arbeitsdruckes vorgesehen ist.

11. Hydraulikkreislauf nach einem der vorstehenden Ansprüche, **dadurch gekennzeichnet, dass** die Pumpe (14) elektrisch, vzw. von einem Elektromotor (15), antreibbar ist.

12. Hydraulikkreislauf nach einem der vorstehenden Ansprüche, **dadurch gekennzeichnet, dass** der Arbeitsdruckanschluss (7) funktional wirksam mit der Pumpe (14) verbunden ist und/oder der Basisdruckanschluss (8) funktional wirksam mit dem Sumpf (9) verbunden ist.

13. Hydraulikkreislauf nach einem der vorstehenden Ansprüche, **dadurch gekennzeichnet, dass** eine mit dem Arbeitsdruck beaufschlagbare Druckspeichervorrichtung (18) vorgesehen ist.

14. Hydraulikkreislauf nach einem der vorstehenden Ansprüche, **dadurch gekennzeichnet, dass** ein an dem Arbeitszylinder (2, 3), dem Leckageventil (23, 24) und dem Druckregelventil (4, 5) anliegender Druck mit einem Drucksensor (27, 28) messbar ist.

15. Hydraulikkreislauf nach einem der vorstehenden Ansprüche, **dadurch gekennzeichnet, dass** der Druckspeichervorrichtung (18) anliegende Arbeitsdruck mit einem Arbeitsdrucksensor (19) messbar ist.

16. Verfahren zur Steuerung eines Hydraulikkreislaufes (1) nach einem der vorstehenden Ansprüche, nämlich zur Steuerung eines Hydraulikkreislaufes (1) nach einem der Ansprüche 1 bis 15, **dadurch gekennzeichnet, dass** in Betriebsphasen, in denen eine Regelung des Arbeitszylinders (2, 3) mit hoher Güte erforderlich ist, die Leckagestelle (21, 22) mit dem Leckageventil (23, 24) zugeschaltet wird und in anderen Betriebsphasen, in denen der Arbeitszylinder (2, 3) mit dem Arbeitsdruck oder dem Basisdruck beaufschlagt wird, zur Erhöhung des Wirkungsgrades des Hydraulikkreislaufes (1) die Leckagestellen (21, 22) mit dem Leckageventil (23, 24) abgeschaltet wird.

17. Verfahren nach dem vorstehenden Anspruch, **dadurch gekennzeichnet, dass** zum Druckabbau der Arbeitszylinderanschluss (6) und der Arbeitsdruckanschluss (7) in Durchlassrichtung gedrosselt wird und der Druck im Arbeitszylinder (2, 3) über die Leckagestelle (21, 22) abgebaut wird, wobei der der Basisdruckanschluss (8) in Sperrrichtung geschaltet ist.
